# EUROPEAN PATENT APPLICATION

(11) **EP 0 715 810 A1**
(43) Date of publication of application: **12.06.1996**
(21) Application number: 95203287.8
(22) Date of filing: 29.11.1995
(51) Int. Cl.: A21C 11/00

(54) **Method for the preparation of pizzas by pressing**

(30) Priority: 06.12.1994 IT MI942467
(71) Applicant: M.G. BRAIBANTI S.p.A., I-20122 Milan (IT)
(72) Inventor: Degli Angeli, Alessandro, I-43100 Parma (IT); Capovilla, Andrea, I-38060 Isera (Trento) (IT)
(74) Representative: Appoloni, Romano

(57) **Abstract**

A method for the industrial preparation of pizzas of pizzeria type is described comprising the following stages: 1) ingredient proportioning, 2) kneading, 3) maturing, 4) division into sized pieces and leavening, 5) base formation, 6) topping, 7) baking, 8) deep-freezing and packaging, wherein the base formation stage 5) comprises the following sub-stages: 5a) flouring the surface of a conveyor system, 5b) oiling the surface of a ball of dough by aerosol, 5c) centering the ball of dough on the conveyor system by means of a hopper loading system, 5d) final pressing by means of a die to form a cavity within the pressed ball of dough. An advantage of this method is that the pizzeria pizza base is obtained directly on the conveyor belt without a pan, and hence ready for undergoing the topping stage.

## Description

This invention relates to a method for the industrial preparation of pizzas of pizzeria type by pressing.

The formation of pizza bases is a process widely used in the food industry, for which various methods are employed. In a first forming system described in the known art, the method comprises an initial rolling stage by which the initial dough, after suitable gauging, is converted into a sheet of dough of the required thickness. A subsequent cutting stage then results in a disc of dough of the required dimensions.

This system does not however enable a raised rim to be obtained on the outer circumference of the dough disc, a vesiculate outer rim being an essential characteristic if the final product is to resemble a pizza produced at the craftsman level.

It has therefore been sought to achieve this rim by various methods, for example by using a rotary cone system in which the cones shift a greater quantity of the dough towards the outer circumference of the dough disc by their rotation, to hence form an outer raised rim.

However apart from its mechanical complexity, the equipment requires the disc to be perfectly centered in that a displacement from the centre of even a few millimetres leads inevitably to a non-continuous rim.

The structure of the dough base is very compact and is certainly not comparable to the structure of a pizza produced at the craftsman level. This compactness derives from the rolling stage. The known art also describes systems involving pressing in a pan, the shape of the pan depending on the form of the pizza base to be obtained. The pressing system employed in this type of process comprises at least one concentric pressing stage by which the dough is shifted progressively in a radial direction towards the edge of the pan.

This system has however considerable limits. The first drawback is related to the loading and unloading of the pans. In this respect, having formed the dough base for the pizza, and then applied the topping and effected the baking directly in the pan, the final product has to be extracted from the pan, requiring the use of complex mechanical systems. In this regard it must be noted that the process is carried out in industrial plant at a high production rate (some thousands of pizzas per hour). Even the minimum obstacle causes stoppage of the production line, leading to considerable and inevitable economic damage.

Moreover in this type of preparation, baking takes place in a metal pan and hence does not simulate baking on stone, this being a fundamental characteristic of a pizza produced at the craftsman level with baking in a pizzeria-type oven. This has a considerable impact on the quality of the final product, the product obtained being commercially less interesting.

The object of the present invention is therefore to obviate the drawbacks of the known art by obtaining a product having characteristics as close as possible to the craftsman product.

This object is attained by a method for the industrial preparation of pizzas of pizzeria type comprising the following stages:
1) ingredient proportioning;
2) kneading;
3) maturing;
4) division into sized pieces and leavening;
5) base formation;
6) topping;
7) baking;
8) deep-freezing and packaging;
characterised in that the base formation stage 5) comprises the following sub-stages:
5a) flouring the surface of a conveyor system;
5b) oiling the surface of a ball of dough by aerosol;
5c) centering the ball of dough on said conveyor system by means of a hopper loading system;
5d) final pressing by means of a die to form a cavity within the pressed ball of dough.

Specifically, this cavity corresponds to a base disc for a pizzeria-type pizza with a rim on its outer circumference.

This method can also comprise a stage 5'), preceding 5a), in which the ball is pre-pressed. Stage 5') is effected for pizza formats having a diameter exceeding 230 mm.

In this regard, this method enables dough discs to be produced having a diameter of between 100 and 400 mm. The outer rim can also be formed of variable dimensions.

The main advantage of the method according to the present invention is that the pizzeria pizza base is obtained directly on the conveyor belt, there being no need for pans or other systems, the disc obtained being hence ready for topping. The required product is hence obtained by a single mechanical action.

The structural and functional characteristics and advantages of the method according to the present invention will be more apparent from the detailed description given hereinafter by way of non-limiting example with reference to the accompanying drawings, in which:

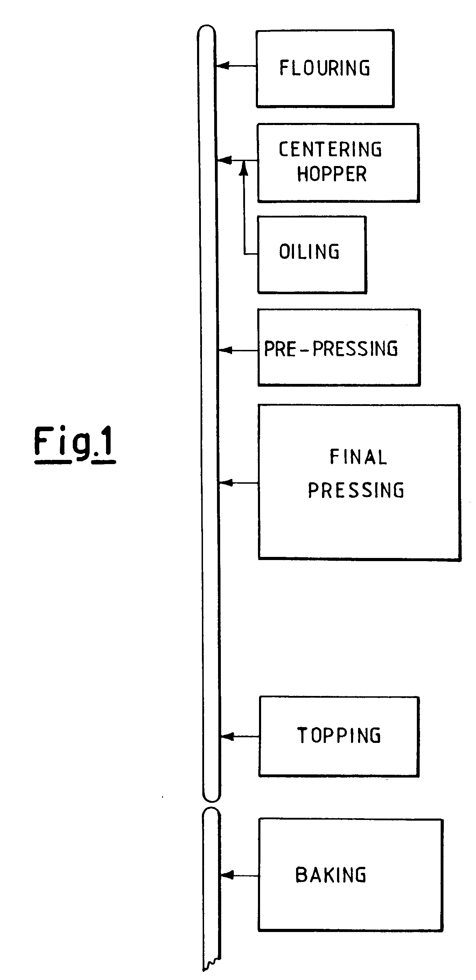

Figure 1 is a block diagram of the method according to the present invention;
Figure 2 represents the die in its rest state prior to the commencement of the pressing stage 5d);
Figure 3 shows the die effecting shaping during the pressing stage 5d).

Stage 5) involving the formation of the cavity according to the method of the present invention is carried out at ambient temperature. The dough leaving the leavening cells has a temperature of about 32-34°C and a moisture content of between 42% and 48%.

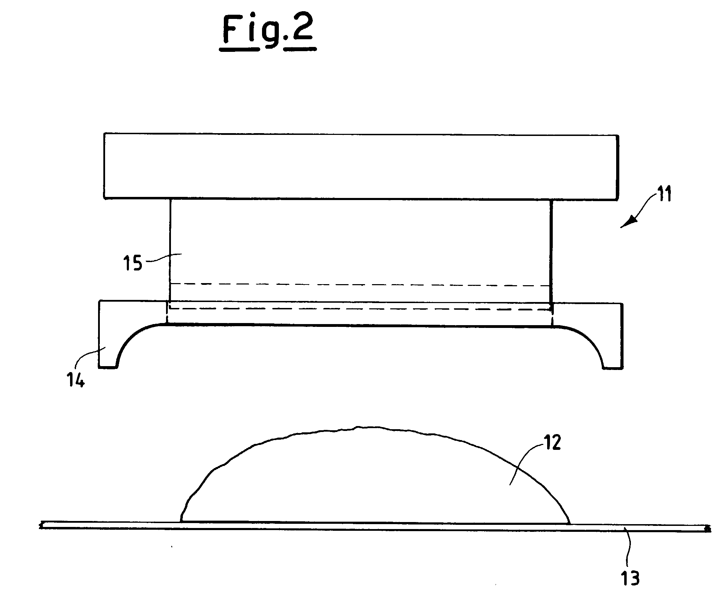

At the commencement of the pressing stage 5d), Figure 2, the die 11 is in its rest position ready to receive the dough ball 12 to be shaped. The hopper, not shown in the figure, and of which the movement is linked to that of the die, deposits the ball onto the conveyor system 13, which preferably consists of a conveyor belt, floured during stage 5a).

The aerosol, based on olive oil, will already have oiled the ball surface (stage 5b).

The ball moves forwards through a defined step where it is subjected, if necessary, to the pre-pressing stage 5') by means of a nylon piston.

After a further step the ball (or disc, if pre-pressed) lies perfectly coaxial (x-y-z) with the overlying die. This zentering stage 5c) is determining in obtaining the desired product.

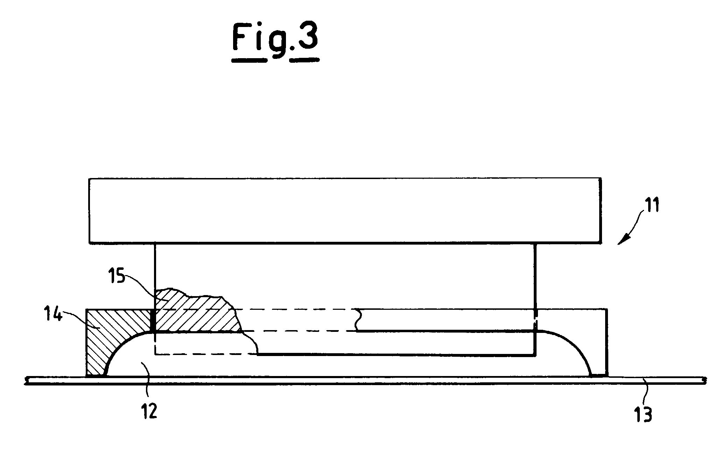

The pressing stage 5d) commences with the descent of the die. The outer part 14 of the die initially makes contact with the underlying belt. Shortly afterwards the inner part 15 of the die begins to press the product, which finally occupies the entire free surface of the die to assume a defined shape, determined by the pattern of the die, as shown in Figure 3.

After remaining stationary for a given time during the pressing stage (this time depending on the rheological properties of the dough), the reverse cycle commences to return the die to its rest position. The inner part firstly separates from the disc shaped by the die, followed by the outer part. This alternation during separation facilitates withdrawal of the die.

The entire linear transporting system is controlled by an encoder control system.

Discs with a different rim and final diameter can also be obtained, depending on the diameter of the die and the weight of the dough ball.

The method of the present invention has a further very important characteristic. The shaped disc when discharged from the die can be subjected to the topping stage 6) and baking stage 7) within the shortest possible time, so as to limit to a minimum the radial shrinkage of the dough disc, this being a natural tendency of pressed dough. This time is generally between 30 seconds and 2 minutes.

This radial shrinkage is indicative of a structure which is not mechanically stressed and which consequently does not present an alteration in its rheological properties, hence enabling a final product of high quality to be obtained.

In contrast, the rolling process of the known art results in low radial shrinkage of the structure.

This is due largely to the mechanical action undergone by the product during rolling, which leads to deformation which is largely irreversible. This also explains the final compactness of the structure.

The device for implementing the method of the invention comprises a silo containing the raw materials and possibly other ingredients, followed by a dough kneading system and a system for breaking off and rounding the balls of dough, of controlled weight. These are followed by a leavening cell, a system for flouring the surface of a conveyor system, generally of belt type, a system for transferring from the cell into the centering hopper and a system for oiling the ball surface. There then follow a system for pressure-shaping the disc for a pizzeria pizza, a complete topping installation, a conveyor belt and an oven.

A belt unloading system and a cooling and deep-freezing tunnel follow, after which the packaging line is situated.

A number of pressing systems can be provided parallelly, depending on the production capacity of the plant.

The die by which the pressing stage is implemented can be provided with an air blowing system for cleaning purposes.

This die comprises two parts, namely a teflon-coated outer part and a teflon-coated inner part.

The outer part consists of a flange of a particular well defined shape, this shape depending on the rim to be obtained. The flange can also be provided with an air-operated cleaning system. The dimensions of the outer part determine the final dimensions of the pizza.

The inner part consists of a block of teflon-coated metal having the size of the inner disc of the final pizza. These parts are assembled mechanically into a single piece.

The two described parts are moved by means of ground rods sliding in bushes. The two parts are urged apart by compression springs.

As already stated, the main advantage of the method of the present invention is that the pizzeria pizza base is obtained directly on the conveyor belt, without the need for pans or other systems, the disc obtained being hence ready for topping. The required product is hence obtained by a single mechanical operation.

A further advantage of the method of the present invention is the centering of the ball by means of a hopper system which ensures perfect aligning of the ball with the die. Moreover, in the case of discs of diameter exceeding 230 mm, the necessary pre-pressing stage does not require special mechanical systems. The final shaping is effected by a single mechanical pressing action.

An advantage of particular importance compared with the known art is the rheological structure of the final product, which is extremely similar to the product obtained manually. In this respect, when viewed in section the characteristic honeycomb of an unstressed structure can be observed, with the rim being properly structured and with a well defined shape.

In addition the withdrawal of the die is achieved without difficulty, directly on the topping belt.

The production line is also small in size in that there are no longer bulky rolling stations upstream of the shaping. This hence facilitates insertion into a structure in which space is limited.

## Claims

1. A method for the industrial preparation of pizzas of pizzeria type comprising the following stages:
1) ingredient proportioning;
2) kneading;
3) maturing;
4) division into sized pieces and leavening;
5) base formation;
6) topping;
7) baking;
8) deep-freezing and packaging;
characterised in that the base formation stage 5) comprises the following sub-stages:
5a) flouring the surface of a conveyor system;
5b) oiling the surface of a ball of dough by aerosol;
5c) centering the ball of dough on said conveyor system by means of a hopper loading system;
5d) final pressing by means of a die to form a cavity within the pressed ball of dough.

2. A method as claimed in claim 1, characterised in that said cavity corresponds to a base disc for a pizzeria-type pizza with a rim on its outer circumference.

3. A method as claimed in claim 1, characterised by comprising a further stage 5'), preceding 5a), in which the ball is pre-pressed.

4. A method as claimed in claim 3, characterised in that said stage 5') is effected for pizza formats having a diameter exceeding 230 mm.

5. A method as claimed in claim 2, characterised by producing base discs having a diameter of between 100 and 400 mm.

6. A method as claimed in claim 2, characterised in that the outer rim can be formed of variable dimensions.

7. A method as claimed in claim 1, characterised in that the cavity forming stage 5) is effected at ambient temperature.

8. A method as claimed in claim 2, characterised in that the formed disc when discharged from the die on termination of stage 5) is subjected to the topping stage 6) and the baking stage 7) within the shortest possible time.

9. A method as claimed in claim 8, characterised in that said time is between 30 seconds and 2 minutes.

10. A method as claimed in claim 1, characterised in that the conveyor system is a belt.

11. A die for implementing the method claimed in claims 1-10, characterised by comprising two parts, namely a teflon-coated outer part and a teflon-coated inner part, the outer part consisting of a flange of a particular shape and the inner part consisting of a block of teflon-coated metal.

12. A die as claimed in claim 11, characterised by being provided with an air blowing system for cleaning purposes.

13. A die as claimed in claim 11, characterised in that the dimensions of the outer part determine the final dimensions of the pizza.

14. A die as claimed in claim 11, characterised in that the shape of the outer part depends on the rim to be obtained.

15. A die as claimed in claim 11, characterised in that the inner part has the same dimensions as the inner disc of the base of the final pizza.

16. Use of the die claimed in claim 11 for preparing a base for a pizzeria pizza.
